# EUROPÄISCHE PATENTSCHRIFT

(11) **EP 0 512 140 B1**
(45) Veröffentlichungstag und Bekanntmachung des Hinweises auf die Patenterteilung: **13.03.1996**
(21) Anmeldenummer: 91107432.6
(22) Anmeldetag: 07.05.1991
(51) Int. Cl.: H04L 12/42

(54) **Verfahren zum Konfigurieren eines aus zwei Ringnetzen gebildeten Kommunikationsnetzes**
Method for configuring a communication network formed of two ring networks
Méthode pour configurer un réseau de communication formé de deux réseaux en anneau

(43) Veröffentlichungstag der Anmeldung: 11.11.1992
(73) Patentinhaber: SIEMENS AKTIENGESELLSCHAFT, D-80333 München (DE)
(72) Erfinder: Hünlich, Klaus, W-8059 Niederneuching (DE)

(56) Entgegenhaltungen:
- EP-A- 0 168 258
- EP-A- 0 193 906
- EP-A- 0 290 933
- IEEE INFOCOM ,89 , OTTAWA, CA; 23. April 1989, NEW YORK, US; Seiten 989 - 997; S. NAKAYASHIKI ET AL.: 'Wrapping and Merging Reconfiguration Mechanism of A Counter-Rotating Dual Ring'

## Beschreibung

Für die Übermittlung paketierter Informationen sind neben den öffentlichen Kommunikationsnetzen sogenannte "lokale Kommunikationsnetze" vorgesehen. Ein derartiges Kommunikationsnetz ist beispielsweise durch zwei, entgegengesetzte Übermittlungsrichtungen aufweisende Ringnetze gebildet. Der Anschluß von Teilnehmereinrichtungen erfolgt jeweils über eine Ringnetzanschlußeinrichtung an beide Ringnetze. Hinsichtlich physikalischer und prozeduraler Eigenschaften werden die beiden Ringnetze überwiegend nach dem internationalen ANSI/IEEE-Standard 802.5 "Token Ring Access Method" realisiert und betrieben. Gemäß diesem Standard wird bei Ausfall einer Ringleitung oder einer weiteren Ringnetzkomponente in der in Übermittlungsrichtung folgenden Ringnetzanschlußeinrichtung eine Unterbrechungsinformation - 'Beacon MAC Frame' - gebildet und im Sinne einer Unterbrechungsmitteilung an die weiteren Teilnehmereinrichtungen des Kommunikationsnetzes übermittelt. Aus der europäischen Veröffentlichungsschrift 0 290 933 ist ein Verfahren bekannt, bei dem nach einer Unterbrechung der Ringleitung oder des Ausfalls von Ringnetzkomponenten nach Bewertung der nach dem Standard 802.5 ausgesandten Unterbrechungsinformationen unter Berücksichtigung der den einzelnen Teilnehmereinrichtungen zugeordneten Ringnetzadressen ein Konfigurieren der intakten Ringnetzteile zu einem Ringnetz eingeleitet wird. Dieses Verfahren setzt voraus, daß nach jedem Konfigurieren - d. h. nach jedem Hinzufügen oder Entfernen einer Teilnehmereinrichtung - mit Hilfe eines Adressenmeldeverfahrens eine die aktuelle Konfiguration repräsentierende Adressentabelle erstellt wird. Das Konfigurieren des Kommunikationsnetzes wird durch sogenannte "Loop back"-Verbindungen (Ringleitungsschleifen) gesteuert. Hierbei wird jeweils der übermittlungsrichtungsgemäß ankommende Ringleitungsanschluß mit dem übermittlungsrichtungsgemäß abgehenden Ringleitungsanschluß des anderen ringförmigen Netzes verbunden. Mit Hilfe dieser "Loop back"-Verbindungen können aus den noch intakten Ringnetzteilen beider Ringnetze ein oder mehrere kleinere Ringnetze konfiguriert werden.

Der Erfindung liegt die Aufgabe zugrunde, ein einfacheres sowie zeit- und softwareaufwandsparendes Verfahren zum Konfigurieren von gestörten bzw. unterbrochenen, aus zwei Ringnetzen gebildeten Kommunikationsnetzen anzugeben. Die Aufgabe wird durch die Merkmale des Anspruchs 1 gelöst.

Der wesentliche Aspekt des erfindungsgemäßen Verfahrens ist darin zu sehen, daß in Teilnehmereinrichtungen, in denen zumindest an einem übermittlungsrichtungsgemäß ankommenden Ringleitungsanschluß keine Ringnetzsignale detektiert oder eine Konfiguration einleitende Unterbrechungskonfigurationsinformationen empfangen werden, ein Konfigurieren bzw. "Loop back"-Verbinden beider Ringnetze durchgeführt wird. Zusätzlich werden in der Teilnehmereinrichtung, in der an zumindest einem übermittlungsrichtungsgemäß ankommenden Ringleitungsanschluß keine Ringnetzsignale detektiert werden, die Konfiguration einleitende und ANSI/IEEE-Standard 802.5-gemäße Unterbrechungskonfigurationsinformationen gebildet und an den Ringleitungsabschnitt übermittelt, in dessen benachbarten Ringleitungsabschnitt die Unterbrechung bzw. Störung auftritt. Werden in einer Teilnehmereinrichtung bzw. in deren Ringnetzanschlußeinrichtungen Unterbrechungskonfigurationsinformationen empfangen, so wird umgehend - wie vorhergehend erläutert - ein "Loop back"-Verbinden bzw. Konfigurieren zu beiden Kommunikationsnetzabschnitten eingeleitet. Des weiteren werden in den Teilnehmereinrichtungen, in denen ein Konfigurieren durchgeführt wurde, die Ringnetzkonfiguration meldende Meldeinformationen gebildet und in ANSI/IEEE-Standard 802.5-gemäße Unterbrechungsinformationen eingefügt. Die derart gebildeten Unterbrechungsmeldeinformationen werden jeweils über den übermittlungsrichtungsgemäß abgehenden Ringleitungsanschluß an die zugeordnete Ringleitung des nicht gestörten Kommunikationsnetzabschnitts übermittelt. Somit werden bei einem Ausfall eines Kommunikationsnetzabschnitts in den zwei der Ausfallstelle nächstgelegenen Teilnehmereinrichtungen Unterbrechungsmeldeinformationen gebildet und ausgesandt. Da das anschließende Ringnetz-Inbetriebnahmeverfahren nur durch eine der beiden Teilnehmereinrichtung eingeleitet werden kann, muß in einer der beiden Teilnehmereinrichtungen das weitere Bilden und Aussenden von Unterbrechungsmeldeinformationen beendet werden. Dies wird dadurch bewirkt, daß in derjenigen von den beiden Teilnehmereinrichtungen, in der Unterbrechungsmeldeinformationen empfangen werden, die jeweils gegenüber der eigenen eine höhere oder alternativ eine niedrigere Teilnehmereinrichtungsadresse aufweisen, das Bilden und Senden von Unterbrechungsmeldeinformationen beendet wird. Die Teilnehmereinrichtungsadresse muß hierbei nicht auf eine aktuelle Konfiguration des Kommunikationsnetzes abgestimmt sein, d.h. es sind fast beliebige Adressen im Rahmen des im Kommunikationsnetz vorgesehenen Adreßraums verwendbar.

Ein wesentlicher Vorteil des erfindungsgemäßen Verfahrens ist darin zu sehen, daß das Konfigurieren umgehend nach dem Feststellen des Nichtempfangs von Ringnetzsignalen eingeleitet und vorteilhaft durch ANSI/IEEE-Standard 802.5-gemäße Unterbrechungsinformationen, in die zusätzlich eine Konfigurations- oder Meldeinformation eingefügt ist, das weitere Konfigurieren und Wiederinbetriebnehmen gesteuert wird, wobei ein einen erheblichen Software- und Zeitaufwand verursachendes und nach jedem Konfigurieren durchzuführendes Adressenmeldeverfahren nicht mehr erforderlich ist.

Gemäß einer vorteilhaften Weiterbildung des erfindungsgemäßen Verfahrens werden in den keine Ringnetzsignale empfangenden Teilnehmereinrichtungen nach Empfang von Unterbrechungskonfigurationsinformationen mit jeweils einer Ringnetz-Rekonfigurationinformation versehene Unterbrechungsrekonfigurationsinformationen gebildet und über den übermittlungsrichtungsgemäß abgehenden Ringleitungsanschluß, der mit dem keine Ringnetzsignale empfangenden Ringleitungsanschluß verbunden ist, an die zugeordnete Ringleitung übermittelt. Sowohl in den die Unterbrechungsrekonfigurationsinformationen bildenden als auch empfangenden Teilnehmereinrichtungen wird das Bilden von Unterbrechungskonfigurationsinformationen eingestellt sowie ausschließlich ein das Teilringnetz wieder in Betrieb nehmendes Inbetriebnahmeverfahren eingeleitet. Nach erfolgreicher Inbetriebnahme des Teilringnetz wird nach einer vorgegebenen Zeitspanne und mit Hilfe der Ringnetzanschlußeinrichtungen jeweils der übermittlungsrichtungsgemäß ankommende Ringleitungsanschluß über die Ringnetzanschlußeinrichtungen mit dem übermittlungsrichtungsgemäß abgehenden Ringleitungsanschluß verbunden und anschließend ein die rekonfigurierten intakten Ringnetze wieder in Betrieb nehmendes Inbetriebnahmeverfahren eingeleitet - Anspruch 2.

Durch diese Maßnahme wird erreicht, daß nach einer Störungsbehebung bzw. einer instandgesetzten vorhergehend unterbrochenen Ringleitung das Kommunikationsnetz automatisch in die ursprüngliche Konfiguration rekonfiguriert - d. h. die "Loop back"- Verbindungen werden entfernt - und die rekonfigurierten ursprünglichen intakten Ringnetze in Betrieb genommen werden. Mit Hilfe einer vorgebbaren Zeitspanne wird eine Verzögerung des Rekonfigurierens bzw. des Aufhebens der "Loop back"-Verbindens erreicht, wodurch im Sinne einer Hysteresewirkung ein zu kurzzeitiges Rekonfigurieren und damit verbundene Instabilitäten im Kommunikationsnetz vermieden werden. Die Hysteresewirkung bei der Rekonfigurierung des Konfigurationsnetzes erscheint besonders vorteilhaft, da durch das sofortige Konfigurieren des gestörten Kommunikationsnetzes in ein rekonfiguriertes Kommunikationsnetz sehr schnell wieder Kommunikationsbeziehungen zwischen den Teilnehmereinrichtungen möglich sind und die zeitverzögerte Rekonfiguration lediglich eine kurzzeitige Beschränkung hinsichtlich der zu übermittelnden Informationsmenge bedeutet. Entgegen einer Verzögerung beim Konfigurieren der beiden Ringnetze beim Auftreten einer Störung bietet eine Verzögerung beim Rekonfigurieren der beiden Ringnetze den Vorteil, daß die Ringnetze kurzzeitig unterbrochen sind und folglich Einschränkungen hinsichtlich der Kommunikationsbeziehungen auf ein Minimum reduziert werden.

In mit zwei Ringnetzen ausgestatteten Kommunikationsnetzen können Teilnehmereinrichtungen eingefügt sein, in denen keine Konfiguration des Kommunikationsnetzes bzw. ein "Loop back"-Verbinden der Ringleitungen vorgesehen ist. Werden in einer derartigen Teilnehmereinrichtung an einem übermittlungsrichtungsgemäß ankommenden Ringleitungsanschluß keine Ringnetzsignale detektiert oder an diesem Unterbrechungskonfigurationsinformationen empfangen, so werden in dieser mit Hilfe der Ringnetzanschlußeinrichtungen Konfigurationsunfähigkeitsmeldungen gebildet und in Unterbrechungsinformationen eingefügt. Die so gebildeten Unterbrechungsfolgeinformationen werden an die Ringleitung desselben Ringnetzes übermittelt. Nach dem Empfang von Unterbrechungsfolgeinformationen in der ersten übermittlungsrichtungsgemäß folgenden Teilnehmereinrichtung, in der ein Konfigurieren von "Loop back"-Verbindungen vorgesehen ist, wird das Konfigurieren nach dem erfindungsgemäßen Verfahren eingeleitet - Anspruch 3. Hierbei werden zusätzlich zum Schalten der Konfigurations- bzw. "Loop back"-Verbindungen Unterbrechungskonfigurationsinformationen gebildet und über den übermittlungseinrichtungsgemäß abgehenden Ringleitungsanschluß, der mit dem die Unterbrechungsfolgeinformationen empfangenden Ringleitungsanschluß verbunden ist, an die zugeordnete Ringleitung übermittelt.

Nach einer weiteren vorteilhaften Ausgestaltung des erfindungsgemäßen Verfahrens werden in einer Teilnehmereinrichtung, in der kein Rekonfigurieren, d. h. Aufheben der "Loop back"-Verbindungen vorgesehen ist und in der an dem Ringleitungsanschluß Unterbrechungskonfigurationsinformationen empfangen werden an dem vorher keine Ringnetzsignale detektiert wurden - ist nach einer Behebung der Störung bzw. der Ringnetzunterbrechung der Fall - Ringnetzrekonfigurationsinformationen gebildet und in Unterbrechungsinformationen eingefügt. Die so gebildeten Unterbrechungsrekonfigurationsinformationen werden mit Hilfe der zugeordneten Ringnetzanschlußeinrichtungen an den zugeordneten Ringleitungsanschluß desselben Ringnetzes übermittelt. Nach dem Empfang der von dieser Teilnehmereinrichtung gebildeten und ausgesandten Unterbrechungsrekonfigurationsinformationen wird in dieser ein das beide Teilringnetze wieder in Betrieb nehmendes Inbetriebnahmeverfahren eingeleitet. Nach erfolgreicher Inbetriebnahme und nach einer vorgegebenen Zeitspanne wird das Rekonfigurieren des Kommunikationsnetzes nach dem erfindungsgemäßen Verfahren eingeleitet - Anspruch 4. Durch die vorgegebene Zeitspanne wird, wie bereits erläutert, die Hysteresewirkung bestimmt.

Treten in dem Kommunikationsnetz mehrere Unterbrechungen bzw. Störungen auf und werden diese annähernd gleichzeitig behoben, so können in den Teilringnetzen zwei oder mehrere Unterbrechungsrekonfigurationsinformation durch die betroffenen Teilnehmereinrichtungen gebildet und ausgesandt werden. Da nur durch eine Unterbrechungsrekonfigurationsinformation anschließend die Inbetriebnahme eingeleitet werden soll, dürfen letzlich nur in einer Teilnehmereinrichtung Unterbrechungsrekonfigurationsinformationen gebildet und ausgesandt werden. Dies wird dadurch erreicht, daß in den Teilnehmereinrichtungen, in denen Unterbrechungsrekonfigurationsinformationen mit Teilnehmereinrichtungsadressen empfangen werden, die gegenüber ihrer eigenen größer bzw. höher oder alternativ kleiner bzw. niedriger sind, das Bilden von Unterbrechungsrekonfigurationsinformationen eingestellt wird - Anspruch 5.

Im folgenden wird das erfindungsgemäße Verfahren anhand von drei zeichnerischen Darstellungen näher erläutert.

Besonders vorteilhaft, wie bereits erläutert, werden die Unterbrechungskonfigurations-, Unterbrechungsrekonfigurations-, die Unterbrechungsmelde- und die Unterbrechungsfolgeinformationen durch ANSI/IEEE-Standard 802.5 Unterbrechungsinformationen (Beacon MAC Frames) gebildet, in die jeweils eine Konfigurations-, Rekonfigurations-, Melde- oder Konfigurationsunfähigkeitsinformation eingefügt ist - Anspruch 6.

Dabei zeigen
- FIG 1 A bis FIG 1 C: jeweils zwei parallel angeordnete Ringnetze und das Konfigurieren nach dem Auftreten einer Unterbrechung,
- FIG 2 A bis FIG 2 C: jeweils zwei parallel angeordnete Ringnetze und das Rekonfigurieren nach dem Beseitigen einer Unterbrechung, und
- FIG 3: die Anordnung der Systemkomponenten in einer Teilnehmereinrichtung, die das Konfigurieren und Rekonfigurieren bewirken.

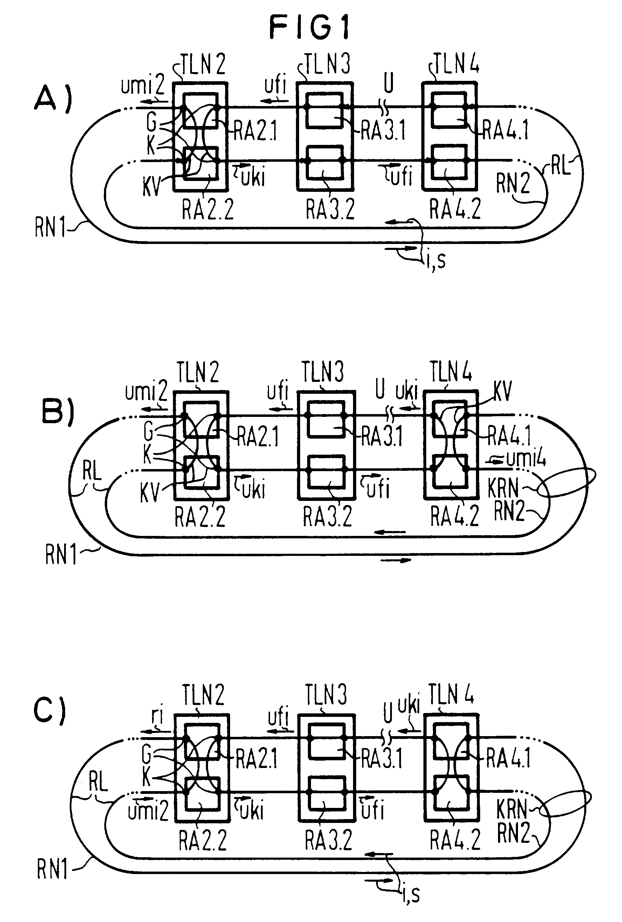

FIG 1 A bis FIG 1 C zeigen jeweils die zur Erläuterung des erfindungsgemäßen Verfahrens erforderlichen Teilnehmereinrichtungen TLN2...TLN4, die jeweils an ein erstes und zweites Ringnetz RN1, RN2 angeschlossen sind. In die beiden Ringnetze RN1, RN2 sind weitere, jedoch nicht dargestellte Teilnehmereinrichtungen TLN1...TLNn eingefügt. Die beiden Ringnetze RN1, RN2 sind durch zwei parallel geführte Ringleitungen RL gebildet, an die jede der Teilnehmereinrichtungen TLN angeschlossen ist. Die Ringleitungen sind beispielsweise durch Koaxialkabel oder Lichtwellenleiter realisierbar. In den Teilnehmereinrichtungen TLN wird die Ringleitung RL über einen übermittlungsrichtungsgemäß ankommenden Ringleitungsanschluß K, eine Ringnetzanschlußeinrichtung RA und einen übermittlungsrichtungsgemäß gehenden Ringleitungsanschluß G geführt. Mit Hilfe der Ringnetzanschlußeinrichtungen RA werden die über die Ringleitung RL übermittelten bzw. zu übermittelnden Informationen i gemäß dem ANSI/IEEE-Standard 802.5 bewertet bzw. gebildet und entsprechend gesteuert.

Für das Ausführungsbeispiel sei angenommen, daß zwischen der dritten und vierten Teilnehmereinrichtung TLN3, TLN4 beispielsweise aufgrund eines Kabelbruchs eine Unterbrechung U der Ringleitung RL des ersten Ringnetzes RN1 vorliegt. Die Unterbrechung U kann weiterhin durch einen Ausfall von einer Ringnetzanschlußeinrichtung RA oder von Systemkomponenten dieser Einrichtung - wie z. B. einer optischen Sende- oder Empfangseinrichtung oder interne Verbindungen - verursacht werden. Des weiteren sei angenommen, daß in der dritten Teilnehmereinrichtung TLN3 keine Komponenten und Prozeduren für das Konfiguried. h. das "Loop back"-Schalten der Ringleitungen RL, vorgesehen sind. Wie in FIG 1 A dargestellt, werden bei bestimmungsgemäßem Betrieb der beiden Ringnetze RN1, RN2 paketierte Informationen i mit Hilfe von entsprechend der Realisierung der Ringleitungen RL optischen oder elektrischen Ringnetzsignalen s über die jeweiligen Ringleitungen RL und Teilnehmereinrichtungen TLN gezielt übermittelt bzw. zwischen jeweils zwei oder mehreren Teilnehmereinrichtungen TLN ausgetauscht. Nach dem Auftreten der Unterbrechung U in der Ringleitung RL des ersten Ringnetzes RN1 können in der dritten Teilnehmereinrichtung TLN3 keine Ringnetzsignale s mehr empfangen werden. Analog hierzu werden bei einer Störung in der Empfangseinrichtung der dritten Teilnehmereinrichtung TLN3 oder der Sendeeinrichtung in der vierten Teilnehmereinrichtung TLN4 keine Ringnetzsignale s an die dritte Teilnehmereinrichtung TLN3 gelangen. Nach dem internationalen ANSI/IEEE-Standard 802.5 wird nach einer Unterbrechung eines Ringnetzes RN1, RN2 in der der Unterbrechung folgenden Teilnehmereinrichtung TLN eine Unterbrechungsinformation, d. h. ein 'Beacon MAC Frame' gebildet, und an das angeschlossene Ringnetz übermittelt. Nach dem erfindungsgemäßen Verfahren wird die Unterbrechung U durch Nichtempfang der Ringnetzsignale s in der dritten Teilnehmereinrichtung TLN3 detektiert und gemäß dem Standard 802.5 eine Unterbrechungsinformation, d. h. ein 'Beacon MAC Frame' (siehe ANSI/IEEE-Standard 802.5 - 1985 - Kapitel 3.3.5), gebildet. Mit Hilfe der Ringnetzanschlußeinrichtung RA3.1 der dritten Teilnehmereinrichtung TLN3 wird zusätzlich eine die Konfigurationsunfähigkeit anzeigende Information gebildet und in die Unterbrechungsinformation eingefügt. Diese derart gebildete Unterbrechungsfolgeinformation ufi wird über den übermittlungsrichtungsgemäß abgehenden Ringleitungsanschluß G an die Ringleitung RL des ersten Ringnetzes RN1 übermittelt. Wie in FIG 1 A dargestellt, wird nach dem Empfang der Unterbrechungsfolgeinformation ufi am übermittlungsrichtungsgemäß ankommenden Ringleitungsanschluß K der Ringnetzanschlußeinrichtung RA2.1 der zweiten Teilnehmereinrichtung TLN2 das Konfigurieren, d. h. "Loop back"-Schalten, eingeleitet. Hierzu wird mit Hilfe der beiden Ringnetzanschluß einrichtungen RA2.1, RA2.2 jeweils der übermittlungsrichtungsgemäß ankommende Ringleitungsanschluß K über die Ringnetzanschlußeinrichtungen RA2.1, RA2.2 mit dem übermittlungsrichtungsgemäß abgehenden Ringleitungsanschluß G des jeweils anderen Ringnetzes RN1, RN2 verbunden. Des weiteren wird in der zweiten Teilnehmereinrichtung TLN2 eine die Konfiguration einleitende Unterbrechungskonfigurationsinformation uki gebildet und an den übermittlungsrichtungsgemäß abgehenden und mit der dritten Teilnehmereinrichtung TLN3 verbundenen Ringleitungsanschluß G übermittelt. Hierbei wird in der zweiten Teilnehmereinrichtung TLN2 eine Unterbrechungsinformation nach dem ANSI/IEEE-Standard 802.5 gebildet und in diese eine die Konfiguration in weiteren Teilnehmereinrichtungen TLN einleitende Konfigurationsinformation eingefügt. Zusätzlich wird in der zweiten Teilnehmereinrichtung TLN2 nach dem Konfigurieren eine das Konfigurieren meldende Unterbrechungsmeldeinformation umi2 gebildet und über den übermittlungsrichtungsgemäß gehenden Ringleitungsanschluß G an die Ringleitung RL des ersten Ringnetzes RN1 übermittelt. Hierbei wird wiederum eine Unterbrechungsinformation nach dem ANSI/IEEE-Standard 802.5 gebildet und in diese eine die Konfiguration meldende Meldeinformation eingefügt. Die derart gebildete Unterbrechungsmeldeinformation umi2 zeigt den weiteren, diese Information empfangenden Teilnehmereinrichtungen TLN an, daß in der zweiten Teilnehmereinrichtung TLN2 konfiguriert - d. h. "Loop back" - geschaltet wurde und anschließend ein weiteres Konfigurieren in Teilnehmereinrichtungen TLN im Sinne einer Konfiguration des Kommunikationsnetzes zu erwarten ist.

Da in der dritten Teilnehmereinrichtung TLN3 kein Konfigurieren, d. h. "Loop back"-Schalten, vorgesehen ist, werden nach Empfang der Unterbrechungskonfigurationsinformationen uki mit Hilfe der zugeordneten Ringnetzanschlußeinrichtung RA3.2 ANSI/IEEE-Standard-orientierte Unterbrechungsfolgeinformationen ufi gebildet und über den übermittlungsrichtungsgemäß abgehenden Ringleitungsanschluß G an die Ringleitung RL des zweiten Ringnetzes RN2 übermittelt.

Nach dem Empfang der Unterbrechungsfolgeinformationen ufi am übermittlungsrichtungsgemäß ankommenden Ringleitungsanschluß K des zweiten Ringnetzes RN2 in der Ringnetzanschlußeinrichtung RA4.2 der vierten Teilnehmereinrichtung TLN4 wird in dieser das Konfigurieren bzw. "Loop back"-Schalten eingeleitet - siehe FIG 1 B. Hierbei wird jeweils der übermittlungsrichtungsgemäß ankommende Ringleitungsanschluß K über die Ringnetzanschlußeinrichtungen RA4.1, RA4.2 mit dem übermittlungsrichtungsgemäß abgehenden Ringleitungsanschluß G des jeweils anderen Ringnetzes RN1, RN2 verbunden. Durch die ankommenden Unterbrechungsfolgeinformationen ufi wird zusätzlich das Bilden von Unterbrechungskonfigurationsinformationen uki bewirkt, die anschließend an den übermittlungsrichtungsgemäß gehenden Ringleitungsanschluß G des ersten Ringnetzes RN2 gesteuert werden. Des weiteren wird in der vierten Teilnehmereinrichtung TLN4 eine Unterbrechungsinformation nach dem ANSI/IEEE-Standard 802.5 gebildet und in diese eine Meldeinformation eingefügt. Die derart gebildete Unterbrechungsmeldeinformation umi4 wird über den übermittlungsrichtungsgemäß gehenden Ringleitungsanschluß G des konfigurierten Ringnetzes KRN übermittelt. Das konfigurierte Ringnetz KRN ist durch die verbleibenden noch intakten Ringnetzteile der beiden ursprünglichen Ringnetze RN1, RN2 und durch die Konfigurations- bzw. "Loop back"-Verbindungen KV in der zweiten und vierten Teilnehmereinrichtung TLN2, TLN4 gebildet.

Aufgrund des vorhergehend beschriebenen Ablaufs des Konfigurierens werden in der zweiten und vierten Teilnehmereinrichtung TLN2, TLN4 Unterbrechungsmeldeinformationen umi2 gebildet und an das konfigurierte Ringnetz KRN übermittelt. Für das Ausführungsbeispiel sei angenommen, daß die Teilnehmereinrichtungsadresse der zweiten gegenüber der vierten Teilnehmereinrichtung TLN größer bzw. höher gewählt wurde. Nach dem erfindungsgemäßen Verfahren wird in der Teilnehmereinrichtung TLN, in der eine Unterbrechungsmeldeinformation umi2, umi4 mit einer größeren bzw. höheren Teilnehmereinrichtungsadresse empfangen wird, das Bilden von Unterbrechungsmeldeinformation umi2, umi4 eingestellt.

Folglich wird in der vierten Teilnehmereinrichtung TLN4 das Bilden und Aussenden der in dieser gebildeten Unterbrechungsmeldeinformationen umi4 beendet. Stattdessen werden in der vierten Teilnehmereinrichtung TLN4 die empfangenen Unterbrechungsmeldeinformationen umi2 über die Konfigurations- bzw. "Loop back"-Verbindung KV an den übermittlungsrichtungsgemäß abgehenden Ringleitungsanschluß G des konfigurierten Ringnetzes KRN übermittelt. Die Unterbrechungsmeldeinformationen umi2 werden über das konfigurierte Ringnetz KRN sowie über die eingefügten Teilnehmereinrichtungen TLN übertragen und gelangen an die zweite Teilnehmereinrichtung TLN2 zurück. In dieser wird nach dem Empfang einer in ihr gebildeten und empfangenen Unterbrechungsmeldeinformation umi2 ein Wiederinbetriebnahmeverfahren entsprechend dem ANSI/IEEE-Standard 802.5 eingeleitet, d.h. eine Ringinbetriebnahmeinformation ri ( 'Recovery Information' ) gebildet und an das konfigurierte Ringnetz KRN übermittelt. Nach dem Ablauf des Inbetriebnahmeverfahrens können über das rekonfigurierte Ringnetz KRN paketierte Informationen i bzw. Ringnetzsignale s übermittelt werden.

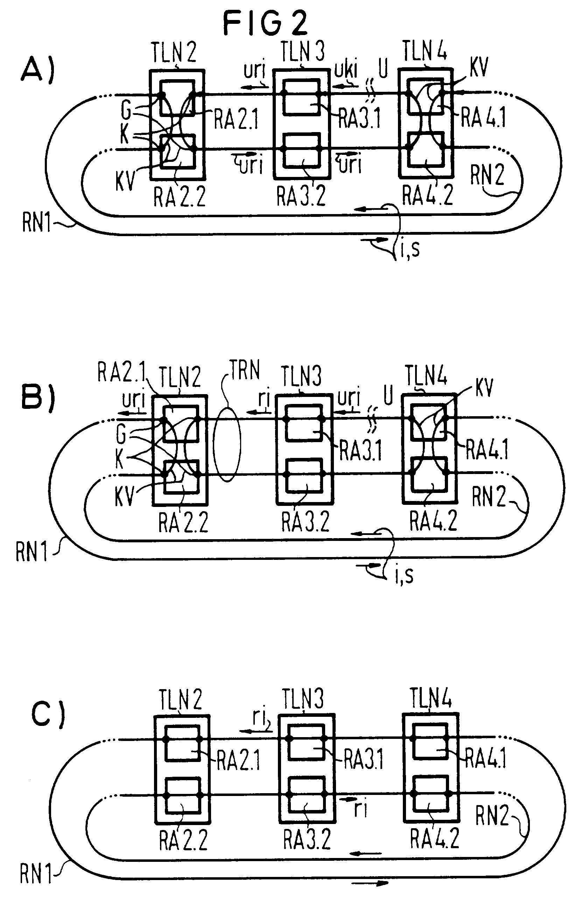

FIG 2 A bis FIG 2 C zeigen Ringnetze RN1, RN2 und Teilnehmereinrichtungen TLN2...TLN4, die entsprechend FIG 1 A bis FIG 1 C realisiert sind. Für das Ausführungsbeispiel sei nun angenommen, daß die Unterbrechung U durch eine entsprechende Entstörungsmaßnahme beseitigt wurde - die vormalige Unterbrechungsstelle U ist in FIG 1 A durch strichlierte Linien angegeben. Durch das Beseitigen der Unterbrechung U gelangen die in der vierten Teilnehmereinrichtung TLN4 gebildeten Unterbrechungskonfigurationsinformation uki an den übermittlungsrichtungsgemäß ankommenden Ringleitungsanschluß K der Ringnetzanschlußeinrichtung 3.1 der dritten Teilnehmereinrichtung TLN3. Nach dem Empfang der Unterbrechungskonfigurationsinformationen uki wird in der dritten Teilnehmereinrichtung TLN3 das Bilden und Übermitteln von Unterbrechungsfolgeinformationen ufi eingestellt. Stattdessen werden Unterbrechungsrekonfigurationsinformationen uri gebildet und an die zweite Teilnehmereinrichtung TLN2 übermittelt - FIG 2 A. Die Unterbrechungsrekonfigurationsinformationen uri stellen nach ANSI/IEEE 802.5 gebildete Unterbrechungsinformationen ('Beacon MAC Frames') dar, in die jeweils eine die Rekonfiguration des Kommunikationsnetzes einleitende Rekonfigurationsinformation eingefügt ist.

Nach dem Empfang der Unterbrechungsrekonfigurationsinformationen uri in der zweiten Teilnehmereinrichtung TLN2 wird in dieser das Bilden und Aussenden von Unterbrechungskonfigurationsinformation uki eingestellt. Stattdessen werden die empfangenen Unterbrechungsrekonfigurationsinformationen uri über die Konfigurations- bzw. "Loop back"-Verbindung KV an den übermittlungsrichtungsgemäß abgehenden Ringleitungsanschlüssen G des zweiten Ringnetzes RN2 gesteuert.

Die Unterbrechungsrekonfigurationsinformationen uri gelangen über die dritte an die vierte Teilnehmereinrichtung TLN3, TLN4. Nach dem Empfang der Unterbrechungsrekonfigurationsinformationen uri in der vierten Teilnehmereinrichtung TLN4 wird in dieser das Bilden und Aussenden von Unterbrechungskonfigurationsinformationen uki beendet. Analog zur zweiten Teilnehmereinrichtung TLN2 werden in der vierten Teilnehmereinrichtung TLN4 stattdessen die empfangenen Unterbrechungsrekonfigurationsinformationen uri über die Konfigurations- bzw. "Loop-back"-Verbindung KV an den übermittlungsrichtungsgemäß abgehenden Ringleitungsanschluß G des ersten Ringnetzes RN1 gesteuert. Hierdurch gelangen die in der dritten Teilnehmereinrichtung TLN3 gebildeten und über das Teilringnetz TRN übermittelten Unterbrechungsrekonfigurationsinformationen uri an diese zurück - siehe FIG 2 B. Werden während einer vorgegebenen Zeitspanne - Hysteresefunktion -, z.B. einer Sekunde, die von dieser ausgesandten Unterbrechungsrekonfigurationsinformationen uri in der dritten Teilnehmereinrichtung TLN3 empfangen, so wird in dieser für das Teilringnetz TRN eine Wiederinbetriebnahmeprozedur eingeleitet, d.h. Wiederinbetriebnahmeinformationen ri ('Recovery Information') gebildet und übermittlungsrichtungsgemäß an das Teilringnetz TRN übermittelt. Das Inbetriebnahmeverfahren wird vorteilhaft nach dem ANSI/IEEE-Standard 802.5 durch einen 'Token'-Wettbewerb (Token-Claiming) durchgeführt. Nach einer erfolgreichen Inbetriebnahme des Teilringnetz TRN in der zweiten und vierten Teilnehmereinrichtung TLN2, TLN4 die Konfigurations bzw. "Loop back"-Verbindungen KV aufgehoben, d.h. die ankommenden mit den abgehenden Ringleitungsanschlüssen G, K des jeweiligen Ringnetzes RN1, RN2 verbunden, und anschließend für das rekonfigurierte, d.h. ursprüngliche Kommunikationsnetz, die Inbetriebnahmeprozeduren für die beiden Ringnetze RN1, RN2 gemäß dem ANSI/IEEE-Standard 802.5 analog zur Inbetriebnahme des Teilringnetzes TRN eingeleitet.

Für den Fall, daß auch für die dritte Teilnehmereinrichtung ein Konfigurieren bzw. "Loop back"-Schalten vorgesehen ist, ist das Bilden und Aussenden der Unterbrechungsfolgeinformation ufi sowie ein Bewerten nicht erforderlich. Das Konfigurieren bzw. "Loop back"-Schalten wird hierbei unmittelbar in der Teilnehmereinrichtung TLN bewirkt, in der keine Ringnetzsignale s oder in der Unterbrechungskonfigurationsinformationen uki empfangen werden. Folglich findet bei einer Unterbrechung U des ersten Ringnetzes RN1 gemäß FIG 1 und FIG 2 zwischen der dritten und vierten Teilnehmereinrichtung TLN3, TLN4 das Konfigurieren, d.h. "Loop back"-Schalten, in der dritten und vierten Teilnehmereinrichtung TLN3, TLN4 statt.

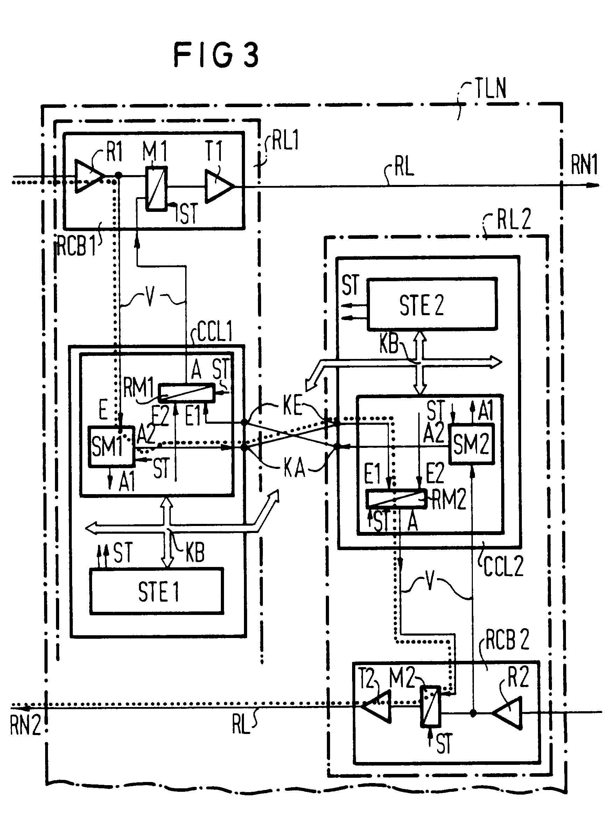

In FIG 3 sind diejenigen Systemkomponenten einer Teilnehmereinrichtung TLN dargestellt, mit deren Hilfe das Konfigurieren bzw. "Loop back"-Verbinden eingeleitet und durchgeführt wird. Sowohl in die Ringleitung RL des ersten und des zweiten Ringnetzes RN1, RN2 - beide Ringleitungen RL können beispielhaft durch optische Lichtwellenleiter oder Koaxialkabel realisiert sein - ist jeweils eine gleich aufgebaute Ringkoppeleinrichtung RCB1, RCB2 eingefügt. Hierbei ist jeweils die übermittlungsrichtungsgemäß ankommende Ringleitung RL mit einer optischen oder elektrischen Empfangseinrichtung R1, R2 verbunden. Der Ausgang dieser Empfangseinrichtung R1, R2 ist jeweils zum Eingang einer Multiplexeinrichtung M1, M2 geführt. An jeweils einer mit jeweils dem Ausgang der Multiplexeinrichtung M1, M2 verbundenen optischen oder elektrischen Sendeeinrichtung T1, T2 ist jeweils die übermittlungsrichtungsgemäß abgehende Ringleitung RL angeschlossen. Jeder der beiden Ringkoppeleinrichtungen RCB1, RCB2 ist eine gleich aufgebaute Zugriffseinrichtung CCL1, CCL2 zugeordnet. Jede Zugriffseinrichtung CCL1, CCL2 enthält zur Durchführung des erfindungsgemäßen Verfahrens ein Schaltmittel SM1, SM2, eine Sendemultiplexeinrichtung SM1, SM2 und eine Steuereinrichtung STE1, STE2. Aufgrund der gleichartigen Realisierung wird im folgenden der Aufbau einer einzigen Zugriffseinrichtung CCL1, CCL2 beschrieben. Ein Eingang E des Schaltmittels SM1, SM2 ist über eine entsprechende Verbindung mit dem Ausgang der optischen oder elektrischen Empfangseinrichtung R1 verbunden. Ein erster Ausgang A1 des Schaltmittels SM1, SM2 ist über weitere, nicht dargestellte Systemkomponenten einerseits mit der Steuereinrichtung STE1, STE2 und andererseits mit den die paketierten Informationen verarbeitenden Einrichtungen der Teilnehmereinrichtung TLN verbunden. Ein zweiter Ausgang A2 des Schaltmittels SM1, SM2 ist auf einen Konfigurationsausgang KA der Zugriffseinrichtung CCL1, CCL2 geführt. Der Konfigurationsausgang KA der Zugriffseinrichtung CCL1, CCL2 ist jeweils an einen Kommunikationseingang KE der anderen Zugriffseinrichtung CCL1, CCL2 angeschlossen. Dieser Kommunikationseingang KE ist mit einem ersten Eingang E1 einer Empfangsmultiplexeinrichtung RM1, RM2 verbunden. An einen zweiten Eingang E2 der Empfangsmultiplexeinrichtung RM1, RM2 werden die von der Steuereinrichtung STE1, STE2 oder den weiterverarbeitenden Einrichtungen der Teilnehmereinrichtung TLN herangeführten, paketierten Informationen gesteuert. Der Ausgang A der Empfangsmultiplexeinrichtung RM1, RM2 ist über eine entsprechende Verbindung V mit einem weiteren Eingang der in der Ringkoppeleinrichtung RCB1, RCB2 angeordneten Multiplexeinrichtung M1, M2 verbunden. Für den Kommunikationsaustausch, d. h. die Steuerung der Konfigurationsverbindungen KV, sowohl zwischen den Systemkomponenten einer Zugriffseinrichtung CCL1, CCL2 als auch für den Kommunikationsaustausch zwischen den beiden Zugriffseinrichtungen CCL1, CCL2 ist ein als Datenbus realisierter Kommunikationsbus KB vorgesehen. Mit Hilfe der an den Kommunikationsbus KB angeschlossenen Steuereinrichtung STE1, STE2, werden insbesondere die in der Teilnehmereinrichtung TLN gebildeten Informationen oder von den beiden Ringnetzen RN1, RN2 zu empfangenden Informationen gemäß dem ANSI/IEEE-802.5-Token-Protokoll bearbeitet bzw. gesteuert. Zusätzlich ist jeder Multiplexer M1, M2, RM1, RM2 und jedes Schaltmittel SM1, SM2 mit einem Steuereingang ST ausgestattet, der jeweils mit einem Steuerausgang ST der zugeordneten Steuereinrichtung STE1, STE2 verbunden ist. Die Steuereinrichtungen STE1, STE2 sind beispielsweise jeweils durch ein Mikroprozessorsystem SAB80186 der Firma Siemens realisiert, wobei die erforderlichen Speichereinrichtungen (Programm- und Datenspeichereinrichtungen) inbegriffen sind.

Eine Zugriffseinrichtung CCL1, CCL2 und die dieser zugeordnete Ringkoppeleinrichtung RCB1, RCB2 bilden jeweils eine Ringnetzanschlußeinrichtung RA1 RA2. Mit Hilfe der beiden Ringnetzanschlußeinrichtungen RA1, RA2 wird sowohl der physikalische als auch der prozedurale Anschluß an die beiden Ringnetze RN1, RN2 bewirkt.

Mit Hilfe der Steuereinrichtungen STE1, STE2 und den entsprechenden Signalen an den Steuereingängen der Multiplexer M1, M2, RM1, RM2 und den Schaltmitteln SM1, SM2 können die Einrichtungen in Abhängigkeit des Betriebszustandes der beiden Ringleitungen RL gesteuert werden. Die für das erfindungsgemäße Verfahren relevante Steuerung der einzelnen Komponenten zu einer "Loop back"-Verbindung KV ist durch eine Punktierung hervorgehoben. Beispielhaft ist hierbei die "Loop back"-Verbindung der übermittlungsrichtungsgemäß ankommenden Ringleitung RL des ersten Ringnetzes RN1 mit der übermittlungsrichtungsgemäß in der Ringkoppeleinrichtung RCB1 abgehenden Ringleitung RL des zweiten Ringnetzes RN2 dargestellt, wobei nach einem "Loop back"-Verbinden zusätzlich die übermittlungsrichtungsgemäß ankommende Ringleitung RL des zweiten Ringnetzes RN2 mit der übermittlungsrichtungsgemäß abgehenden Ringleitung RL des ersten Ringnetzes RN1 über die Zugriffseinrichtungen CCL1, CCL2 verbunden wird.

## Patentansprüche

1. Verfahren zum Konfigurieren eines aus zwei parallel angeordneten, entgegengesetzte Übermittlungsrichtungen aufweisenden Ringnetzen (RN1, RN2) gebildeten Kommunikationsnetzes mit Teilnehmereinrichtungen (TLN), die mit beiden Ringnetzen (RN1, RN2) jeweils durch eine Ringnetzanschlußeinrichtung (RA) verbunden sind, wobei über die beiden Ringnetze (RN1, RN2) im Sinne eines Kommunikationsaustausches Ringnetzsignale (s) übermittelt werden,
- bei dem in Teilnehmereinrichtungen (TLN), in denen zumindest an einem übermittlungsrichtungsgemäß ankommenden Ringleitungsanschluß (K) keine Ringnetzsignale (s) detektiert oder an diesem Unterbrechungskonfigurationsinformationen (uki) empfangen werden, mit Hilfe der jeweils mit einer Steuereinrichtung (STE1, STE2) und Schaltmitteln (M1, M2, RM1, RM2, SM1, SM2) ausgestatteten Ringnetzanschlußeinrichtungen (RA)
-- im Sinne des Konfigurierens des Kommunikationsnetzes jeweils der übermittlungsrichtungsgemäß ankommende Ringleitungsanschluß (K) über die Ringnetzanschlußeinrichtungen (RA) mit dem übermittlungsrichtungsgemäß abgehenden Ringleitungsanschluß (G) des weiteren Ringnetzes (RN1, RN2) verbunden wird,
-- mit jeweils einer eine Ringnetzkonfiguration meldende Meldeinformation versehene Unterbrechungsmeldeinformationen (umi2, umi4) gebildet und über den übermittlungsrichtungsgemäß abgehenden Ringleitungsanschluß (G), der nicht mit dem übermittlungsrichtungsgemäß ankommenden und keine Ringnetzsignale (s) oder Unterbrechungskonfigurationsinformationen (uki) empfangenden Ringleitungsanschluß (K) verbunden ist, an die zugeordnete Ringleitung (RL) übermittelt wird, sowie
-- in Teilnehmereinrichtungen (TLN), in denen keine Ringnetzsignale (s) zumindest an einem übermittlungsrichtungsgemäß ankommenden Ringleitungsanschluß (RLA) detektiert werden, mit jeweils einer eine Ringnetzkonfiguration einleitende Konfigurationsinformation versehene Unterbrechungskonfigurationsinformationen (uki) gebildet und über den übermittlungsrichtungsgemäß abgehenden Ringleitungsanschluß (G), der mit dem keine Ringnetzsignale (s) empfangenden Ringleitungsanschluß (K) verbunden ist, an die zugeordnete Ringleitung (RL) übermittelt werden,
- bei dem in den Teilnehmereinrichtungen (TLN), in denen Unterbrechungsmeldeinformationen (umi2, umi4) gebildet sowie ausgesandt und nicht in dieser Teilnehmereinrichtung (TLN) gebildete sowie gegenüber der eigenen eine höhere oder niedrigere Teilnehmereinrichtungsadresse aufweisende Unterbrechungsmeldeinformationen (umi2, umi4) empfangen werden, das Bilden und Aussenden von Unterbrechungsmeldeinformationen (umi4) beendet wird, und
- bei dem in den Teilnehmereinrichtungen (TLN), in denen Unterbrechungsinformationen (umi2, umi4) gebildet und ausgesandt sowie gegenüber der eigenen eine niedrigere oder höhere Teilnehmereinrichtungsadresse aufweisende Unterbrechungsmeldeinformationen (umi2) empfangen werden, ein Ringnetz-Wiederinbetriebnahmeverfahren eingeleitet wird.

2. Verfahren nach Anspruch 1,
**dadurch gekennzeichnet,**
- daß in den keine Ringnetzsignale (s) empfangenden Teilnehmereinrichtungen (TLN), nach Empfang von Unterbrechungskonfigurationsinformationen (uki) mit jeweils einer Ringnetz-Rekonfigurationsinformation versehene Unterbrechungsrekonfigurationsinformationen (uri) gebildet und über den übermittlungsrichtungsgemäß abgehenden Ringleitungsanschluß (G), der mit dem keine Ringnetzsignale (S) empfangenden Ringleitungsanschluß (K) verbunden ist, an die zugeordnete Ringleitung (RL) übermittelt werden,
- daß in den die Unterbrechungsrekonfigurationsinformationen (uri) bildenden und empfangenden Teilnehmereinrichtungen (TLN) das Bilden von Unterbrechungskonfigurationsinformationen (uki) eingestellt wird und ein das Teilringnetz (TRN) wieder in Betrieb nehmendes Inbetriebnahmeverfahren eingeleitet wird, und
- daß nach einer erfolgreichen Inbetriebnahme des Teilringnetzes (TRN) nach einer vorgegebenen Zeitspanne mit Hilfe der Ringnetzanschlußeinrichtungen (RA),
-- im Sinne des Rekonfigurierens des Kommunikationsnetzes in den die Konfigurationsverbindungen KV durchführenden Teilnehmereinrichtungen (TLN2, TLN4) jeweils der übermittlungsrichtungsgemäß ankommende Ringleitungsanschluß (K) über die Ringnetzanschlußeinrichtungen (RA) mit dem übermittlungsrichtungsgemäß abgehenden Ringleitungsanschluß (G) desselben Ringnetzes (RN1, RN2) verbunden wird, und
-- die rekonfigurierten, intakten Ringnetze (RN1, RN2) wieder in Betrieb nehmende Inbetriebnahmeverfahren eingeleitet werden.

3. Verfahren nach Anspruch 1,
**dadurch gekennzeichnet,**
- daß in den Teilnehmereinrichtungen (TLN3), für die keine Mittel zum Verbinden der übermittlungsrichtungsgemäß ankommenden mit den abgehenden Ringleitungsanschlüssen (G,K) des jeweils anderen Ringnetzes (RN1, RN2) vorgesehen sind und in denen an einem übermittlungsrichtungsgemäß ankommenden Ringleitungsanschluß (K) keine Ringnetzsignale (s) detektiert oder an diesem Unterbrechungskonfigurationsinformationen (uki) empfangen werden, mit einer Konfigurationsunfähigkeitsmeldung versehene Unterbrechungsfolgeinformationen (ufi) mit Hilfe der Ringnetzanschlußeinrichtungen (RA) gebildet und über diese an den übermittlungsrichtungsgemäß abgehenden Ringleitungsanschluß (G) desselben Ringnetzes (RN1, RN2) an die zugeordnete Ringleitung (RL) übermittelt werden, und
- daß in einer der folgenden Teilnehmereinrichtungen (TLN2), in denen das Verbinden von übermittlungsrichtungsgemäß ankommenden mit den abgehenden Ringleitungsanschlüssen (G,K) des jeweils anderen Ringnetzes (RN1, RN2) vorgesehen ist, nach Empfang einer Unterbrechungsfolgeinformation (ufi) das Konfigurieren des Kommunikationsnetzes eingeleitet wird, wobei Unterbrechungskonfigurationsinformationen (uki) gebildet und über den übermittlungsrichtungsgemäß abgehenden Ringleitungsanschluß (G), der mit dem die Unterbrechungsfolgeinformationen (ufi) empfangenden Ringleitungsanschluß (RL) verbunden ist, an die zugeordnete Ringleitung (RL) übermittelt werden.

4. Verfahren nach Anspruch 2,
**dadurch gekennzeichnet,**
- daß in einer Teilnehmereinrichtung (TLN3), in der keine Mittel zum Verbinden der übermittlungsrichtungsgemaß ankommenden mit den abgehenden Ringleitungsanschlüssen (G,K) des jeweils anderen Ringnetzes (RN1, RN2) vorgesehen sind nach Empfang von Unterbrechungskonfigurationsinformationen (uki) an einem übermittlungsrichtungsgemäß ankommenden Ringleitungsanschluß (G), an dem vorher keine Ringnetzsignale (s) empfangen werden, mit jeweils einer Ringnetz-Rekonfigurationsinformation versehene Unterbrechungsrekonfigurationsinformationen (uri) mit Hilfe der zugeordneten Ringnetzanschlußeinrichtungen (RA) gebildet und über diese und über den übermittlungsrichtungsgemäß abgehenden, zugeordneten Ringleitungsanschluß (G) an die Ringleitung (RL) desselben Ringnetzes (RN1, RN2) übermittelt werden, und
- daß nach dem Übermitteln über das Teilringnetz (TRN) und dem Empfang der von dieser Teilnehmereinrichtungen (TLN3) gebildeten und ausgesandten Unterbrechungsrekonfigurationsinformationen (uri) in dieser ein das Teilringnetz (TRN) wieder in Betrieb nehmendes Inbetriebnahmeverfahren eingeleitet wird, und
- daß nach erfolgreicher Inbetriebnahme und nach einer vorgegebenen Zeitspanne das Rekonfigurieren des Kommunikationsnetzes eingeleitet wird.

5. Verfahren nach mindestens einem der vorhergehenden Ansprüche,
**dadurch gekennzeichnet,**
- daß in einer Unterbrechungsrekonfigurationsinformationen (uri) bildenden Teilnehmereinrichtung (TLN3) nach dem Empfang nicht in dieser Teilnehmereinrichtung (TLN) gebildeter, höhere oder niedrigere Teilnehmereinrichtungsadressen aufweisender Unterbrechungsrekonfigurationsinformationen (uri) das Bilden von Unterbrechungskonfigurationsinformation (uri) eingestellt wird.

6. Verfahren nach mindestens einem der vorhergehenden Ansprüche,
**dadurch gekennzeichnet,**
- daß die Unterbrechungskonfigurations-, die Unterbrechungsrekonfigurations-, die Unterbrechungsmelde- und die Unterbrechungsfolgeinformationen (uki, uri, umi, ufi) durch ANSI/IEEE-Standard 802.5-Unterbrechungsinformationen gebildet sind, in die eine Konfigurations-, Rekonfigurations-, Meldeinformation oder Konfigurationsunfähigkeitsmeldung eingefügt ist.

## Claims

1. Method for configuring a communication network formed of two ring networks (RN1, RN2) which are arranged in parallel and have opposite transmission directions, which communication network has subscriber installations (TLN) connected to both ring networks (RN1, RN2) by means of a ring network access unit (RA) in each case, ring network signals (s) being transmitted over the two ring networks (RN1, RN2) for the purpose of communications exchange,
- in which in subscriber installations (TLN) in which no ring network signals (s) are detected at least at one ring line connection (K) for the incoming transmission direction or interrupt configuration information (uki) is received thereat, with the aid of the ring network access units (RA) equipped in each case with a control device (STE1, STE2) and switching means (M1, M2, RM1, RM2, SM1, SM2)
-- for the purpose of configuring the communication network in each case the ring line connection (K) for the incoming transmission direction is connected via the ring network access units (RA) to the ring line connection (G) for the outgoing transmission direction of the further ring network (RN1, RN2),
-- interrupt reporting information (umi2, umi4) provided with reporting information reporting a ring network configuration in each case is formed and transmitted to the associated ring line (RL) via the ring line connection (G) for the outgoing transmission direction which is not connected to the ring line connection (K) for the incoming transmission direction that is not receiving any ring network signals (s) or interrupt configuration information (uki), and also
-- in subscriber installations (TLN) in which no ring network signals (s) are detected at least at one ring line connection (RLA) for the incoming transmission direction, interrupt configuration information (uki) provided with configuration information initiating a ring network configuration in each case is formed and transmitted to the associated ring line (RL) via the ring line connection (G) for the outgoing transmission direction which is connected to the ring line connection (K) that is not receiving any ring network signals (s),
- in which the formation and transmission of interrupt reporting information (umi4) is terminated in the subscriber installations (TLN) in which interrupt reporting information (umi2, umi4) is formed as well as transmitted and interrupt reporting information (umi2, umi4) which is not formed in said subscriber installation (TLN) and has a higher or lower subscriber installation address in comparison with its own is received, and
- in which a ring network restoration method is initiated in the subscriber installations (TLN) in which interrupt information (umi2, umi4) is formed and transmitted and also interrupt reporting information (umi2) having a lower or higher subscriber installation address in comparison with its own is received.

2. Method according to Claim 1, characterized in that
- in the subscriber installations (TLN) that are not receiving any ring network signals (s), after interrupt configuration information (uki) has been received interrupt reconfiguration information (uri) provided with ring network reconfiguration information in each case is formed and transmitted to the associated ring line (RL) via the ring line connection (G) for the outgoing transmission direction which is connected to the ring line connection (K) that is not receiving any ring network signals (S),
- in that the formation of interrupt configuration information (uki) is terminated in the subscriber installations (TLN) forming and receiving the interrupt reconfiguration information (uri) and a commissioning procedure which puts the partial ring network (TRN) back into operation is initiated, and
- in that after a successful commissioning of the partial ring network (TRN), after a predetermined period of time, with the aid of the ring network access units (RA)
-- for the purpose of reconfiguring the communication network, in the subscriber installations (TLN2, TLN4) making the configuration connections KV in each case the ring line connection (K) for the incoming transmission direction is connected via the ring network access units (RA) to the ring line connection (G) for the outgoing transmission direction of the same ring network (RN1, RN2), and
-- - commissioning procedures which put the reconfigured, intact ring networks (RN1, RN2) back into operation are initiated.

3. Method according to Claim 1, characterized in that
- in the subscriber installations (TLN3) for which no means are provided for connecting the ring line connections (G, K) for the incoming transmission direction to those for the outgoing transmission direction of the respective other ring network (RN1, RN2), and in which no ring network signals (s) are detected at a ring line connection (K) for the incoming transmission direction or interrupt configuration information (uki) is received thereat, interrupt result information (ufi) provided with a configuration-incapable message is formed with the aid of the ring network access units (RA) and is transmitted via the latter at the ring line connection (G) for the outgoing transmission direction of the same ring network (RN1, RN2) to the associated ring line (RL), and
- in that in one of the following subscriber installations (TLN2) in which the connection of ring line connections (G, K) for the incoming transmission direction to those for the outgoing transmission direction of the respective other ring network (RN1, RN2) is provided, the configuring of the communication network is initiated after interrupt result information (ufi) has been received, interrupt configuration information (uki) being formed and being transmitted to the associated ring line (RL) via the ring line connection (G) for the outgoing transmission direction which is connected to the ring line connection (RL) receiving the interrupt result information (ufi).

4. Method according to Claim 2, characterized in that
- in a subscriber installation (TLN3) in which no means are provided for connecting the ring line connections (G, K) for the incoming transmission direction to those for the outgoing transmission direction of the respective other ring network (RN1, RN2), after the reception of interrupt configuration information (uki) at a ring line connection (G) for the incoming transmission direction at which no ring network signals (s) were previously being received, interrupt reconfiguration information (uri) provided with ring network reconfiguration information in each case is formed with the aid of the associated ring network access units (RA) and is transmitted via the latter and via the associated ring line connection (G) for the outgoing transmission direction to the ring line (RL) of the same ring network (RN1, RN2), and
- in that after the transmission over the partial ring network (TRN) and the reception of the interrupt reconfiguration information (uri) formed and transmitted by said subscriber installations (TLN3), a commissioning procedure which puts the partial ring network (TRN) back into operation is initiated therein, and
- in that the reconfiguration of the communication network is initiated after successful commissioning and after a predetermined period of time.

5. Method according to at least one of the preceding claims, characterized in that
- the formation of interrupt configuration information (uri) is terminated in a subscriber installation (TLN3) forming interrupt reconfiguration information (uri) after the reception of interrupt reconfiguration information (uri) not formed in said subscriber installation (TLN) and having higher or lower subscriber installation addresses.

6. Method according to at least one of the preceding claims, characterized in that
- the interrupt configuration information, the interrupt reconfiguration information, the interrupt reporting information and the interrupt result information (uki, uri, umi, ufi) are formed by ANSI/IEEE Standard 802.5 interrupt information into which a configuration message, reconfiguration message, reporting information or configuration-incapable message is inserted.

## Revendications

1. Procédé de configuration d'un réseau de communication formé de deux réseaux en anneau (RN1, RN2) disposés en parallèle, ayant des sens de transmission opposés et comportant des postes d'abonnés (TLN), qui sont reliés aux deux réseaux en anneau (RN1,RN2) chacun par l'intermédiaire d'un dispositif (RA) de raccordement d'un réseau en anneau, des signaux (s) du réseau en anneau étant transmis par l'intermédiaire des deux réseaux en anneau (RN1, RN2) en vue d'un échange de communication,
- selon lequel dans des postes d'abonnés (TLN), dans lesquels on ne détecte pas de signaux (s) de réseau en anneau au moins sur une borne (K) de ligne en anneau d'arrivée selon le sens de transmission ou dans lesquels on reçoit des informations de configuration d'interruption (uki) sur cette borne, à l'aide des dispositifs (RA) de raccordement des réseaux en anneau, équipés chacun d'un dispositif de commande (STE1,STE2) et de moyens de commutation (M1,M2,RM1,RM2,SM1,SM2),
-- on relie en vue de la configuration du réseau de communication, la borne (K) de ligne en anneau d'arrivée selon le sens de transmission par l'intermédiaire des dispositifs (RA) de raccordement de réseaux en anneau, à la borne (G) de ligne en anneau de départ, selon le sens de transmission, de l'autre réseau en anneau (RN1,RN2),
-- on forme des informations de signalisation d'interruption (umi2, umi4) munies chacune d'une information de signalisation signalant une configuration de réseau en anneau, et on les transmet à la ligne en anneau associée (RL), par l'intermédiaire de la borne (G) de la ligne en anneau de départ selon le sens de transmission, non reliée à la borne (K) de ligne en anneau d'arrivée selon le sens de transmission, qui ne reçoit pas de signaux (s) du réseau en anneau ni d'information de configuration d'interruption (uki), et
-- dans des postes d'abonnés (TLN), dans lesquels on ne détecte pas de signaux (s) de réseau en anneau au moins sur une borne (RLA) de ligne en anneau d'arrivée selon le sens de transmission, on forme des informations de configuration d'interruption (uki), munies chacune d'une information de configuration déclenchant une configuration de réseau en anneau et on les transmet à la ligne en anneau associée (RL) par l'intermédiaire de la borne (G) de la ligne en anneau de départ selon le sens de transmission, qui est reliée à la borne (K) de la ligne en anneau ne recevant pas de signaux (s) de réseau en anneau,
- selon lequel dans les postes d'abonnés (TLN), dans lesquels on forme et on émet des informations de signalisation d'interruption (umi2, umi4), et dans lesquels on reçoit des informations de signalisation d'interruption (umi2, umi4) non formées dans ce poste d'abonné (TLN) et comportant une adresse d'un niveau supérieur ou inférieur à l'adresse de ce poste d'abonné, on achève la formation et l'émission d'informations de signalisation d'interruption (umi4), et
- selon lequel dans les postes d'abonnés (TLN), dans lesquels on forme et on émet des informations d'interruption (umi2, umi4) et dans lesquels on reçoit des informations de signalisation d'interruption (umi2) ayant une adresse de poste d'abonné inférieure ou supérieure à l'adresse de ce poste, on déclenche un procédé de remise en service du réseau en anneau.

2. Procédé suivant la revendication 1, caractérisé par le fait
- que dans les postes d'abonnés (TLN) qui ne reçoivent pas de signaux (s) des réseaux en anneau, après réception d'informations de configuration d'interruption (uki), on forme des informations de reconfiguration d'interruption (uri) munies chacune d'une information de reconfiguration de réseau en anneau et on les transmet à la ligne en anneau associée (RL) par l'intermédiaire de la borne (G) de la ligne en anneau de départ selon le sens de transmission, qui est reliée à la borne (K) de la ligne en anneau ne recevant pas de signaux (S) de réseau en anneau,
- que dans les postes d'abonnés (TLN) qui forment et reçoivent les informations de reconfiguration d'interruption (uri), on établit la formation d'informations de configuration d'interruption (uki) et on déclenche un procédé de mise en service, qui remet en service le réseau en anneau partiel (TRN), et
- qu'après une mise en service réussie du réseau en anneau partiel (TRN), au bout d'un intervalle de temps prescrit, à l'aide des dispositifs (RA) de raccordement des réseaux en anneau,
-- dans le sens de la reconfiguration du réseau de communication, on relie dans les postes d'abonnés (TLN2, TLN4) effectuant les liaisons de configuration KV, la borne (K) de la ligne en anneau d'arrivée selon le sens de transmission par l'intermédiaire des dispositifs (RA) de raccordement des réseaux en anneau, à la borne (G) de la ligne en anneau de départ selon le sens de transmission, de ce même réseau en anneau (RN1, RN2), et
-- on déclenche des procédés de mise en service, qui remettent en service les réseaux en anneau intacts et reconfigurés (RN1,RN2).

3. Procédé suivant la revendication 1, caractérisé par le fait
- que dans les postes d'abonnés (TLN3), pour lesquels il n'est pas prévu de moyens pour relier les bornes (G,K) de la ligne en anneau d'arrivée selon le sens de transmission aux bornes (G,K) de la ligne en anneau de départ de l'autre réseau en anneau (RN1,RN2) et dans lesquels on ne détecte pas de signaux (s) de réseau en anneau sur une borne (K) de la ligne en anneau d'arrivée selon le sens de transmission, ou dans lesquels on reçoit des informations de configuration d'interruption (uki) sur cette borne, on forme des informations de suites d'interruption (ufi), qui sont munies d'une signalisation d'impossibilité de configuration, à l'aide des dispositifs (RA) de raccordement des réseaux en anneau et on les transmet par l'intermédiaire de ces dispositifs, à la borne (G) de la ligne en anneau de départ, selon le sens de transmission, du même réseau en anneau (RN1,RN2), à la ligne en anneau associée (RL),
- que dans l'un des postes d'abonnés suivants (TLN2), dans lesquels est prévue la liaison de bornes (G,K) de la ligne en anneau de départ selon le sens de transmission aux bornes (G,K) de la ligne en anneau de départ de l'autre réseau en anneau (RN1,RN2), on déclenche la configuration du réseau de communication après réception d'une information de suites d'interruption (ufi), des informations de configuration d'interrupton (uki) étant formées et étant transmises à la ligne en anneau associée (RL) par l'intermédiaire de la borne (G) de la ligne en anneau de départ selon le sens de transmission, qui est reliée à la borne (RL) de la ligne en anneau recevant les informations de suites d'interruption (ufi).

4. Procédé suivant la revendication 2, caractérisé par le fait
- que dans un poste d'abonné (TLN3), dans lequel il n'est pas prévu de moyens pour relier les bornes (G,K) de la ligne en anneau d'arrivée selon le sens de transmission aux bornes (G,K) de la ligne en anneau de départ de l'autre réseau en anneau (RN1, RN2), on forme, après réception d'informations de configuration d'interruption (uki) sur une borne (G) de la ligne en anneau d'arrivée selon le sens de transmission, sur laquelle on n'a pas reçu de signaux (s) de réseau en anneau auparavant, des informations de reconfiguration d'interruption (uri), munies chacune d'une information de reconfiguration de réseau en anneau, à l'aide des dispositifs associés (RA) de raccordement de réseau en anneau et on les transmet, par l'intermédiaire de ces dispositifs et de la borne associée (G) de la ligne en anneau de départ selon le sens de transmission, à la ligne en anneau (RL) de ce même réseau en anneau (RN1, RN2), et
- qu'après la transmission par l'intermédiaire du réseau en anneau partiel (TRN) et après la réception des informations de reconfiguration d'interruption (uri) formées et émises par ce poste d'abonné (TLN3), on déclenche dans ce poste d'abonné un procédé de mise en service, qui remet en service le réseau en anneau partiel (TRN), et
- qu'après la mise en service réussie au bout d'un laps de temps prescrit, on déclenche la reconfiguration du réseau de communication.

5. Procédé suivant au moins l'une des revendications précédentes, caractérisé par le fait
- que dans un poste d'abonné (TLN3) formant des informations de reconfiguration d'interruption (uri), après la réception d'informations de reconfiguration d'interruption (uri) non formées dans ce poste d'abonné (TLN) et ayant des adresses supérieures ou inférieures, on établit la formation d'une information de reconfiguration d'interruption (uri).

6. Procédé suivant au moins l'une des revendications précédentes, caractérisé par le fait
- que les informations de configuration d'interruption, les informations de reconfiguration d'interruption, les informations de signalisation d'interruption et les informations de suites d'impulsions (uki, uri, umi, ufi) sont formées d'informations d'interruption de la norme ANSI/IEEE 802.5, dans lesquelles est insérée une information de configuration, une information de reconfiguration, une information de signalisation ou une information d'impossibilité de configuration.
